# EUROPEAN PATENT SPECIFICATION

(11) **EP 4 296 643 B1**
(45) Date of publication and mention of the grant of the patent: **26.06.2024**
(21) Application number: 23179943.8
(22) Date of filing: 19.06.2023
(51) Int. Cl.: G01L 9/00, G01L 19/06, G01L 19/14

(54) **CERAMIC PRESSURE SENSOR WITH FRAME FOR PROTECTIVE SURFACE FILLING**
KERAMISCHER DRUCKSENSOR MIT RAHMEN FÜR SCHUTZFLÄCHENFÜLLUNG
CAPTEUR DE PRESSION EN CÉRAMIQUE AVEC CADRE POUR LE REMPLISSAGE DE LA SURFACE DE PROTECTION

(30) Priority: 20.06.2022 IT 202200013018
(43) Date of publication of application: 27.12.2023
(73) Proprietor: Kolektor Microtel S.r.l., 20065 Inzago (IT)
(72) Inventor: MAY, Roberto, 20159 Milano (IT); FACCHETTI, Fermo, 20065 Gessate (Milano) (IT); BERTOLOTTI, Massimo, 20064 Gorgonzola (Milano) (IT)
(74) Representative: Rapisardi, Mariacristina

(56) References cited:
- EP-B1- 2 554 968
- US-B2- 10 247 629

## Description

The present invention relates to a flat piezoresistive pressure sensor.

It is well known that ceramic pressure sensors, whether two-piece or one-piece sensors, typically have a plurality of electronic components and electrical circuits on the upper face of the substrate.

As is well known, electronic components and their related circuits and electrical contacts can suffer in harsh environments, in particular moisture from condensation or the outdoor environment, with the risk of metal migration from the conductor tracks and termination pins of integrated circuits and other electronic components or electrical contacts (typically made of copper or silver) causing short circuits, intermittent malfunctions and failures, loss of connections, etc.

Traditionally, electronic components are protected with inorganic dielectric protection deposited on all tinned or silver-plated solder pads in order to have no exposed silver or copper parts, and thus to eliminate or minimise the risk of metal migration.

However, it is well known that the simple deposition of inorganic protection on solder pads can be affected by inaccuracies in the positioning and quantity of the protection material directly resulting from material deposition and packaging technologies, thus not guaranteeing the high protection and reliability required of electronic components for the proper processing of detected signals.

Moreover, this surface protection does not guarantee the relative protection of the pins and terminations of the electronic components themselves.

Pressure sensors in the state of the art are known from US 10 247 629 B2 and EP 2 554 968 B1.

There is therefore a need to improve the design of a known ceramic pressure sensor.

The technical task of the present invention is, therefore, to realise a flat piezoresistive pressure sensor that can eliminate the complained of technical drawbacks of the known technique.

Within this technical task, one aim of the invention is to realise a flat piezoresistive pressure sensor in which the electronic components are adequately protected against moisture and/or harsh environmental conditions.

Another purpose of the invention is to realise a flat piezoresistive pressure sensor in which the electronic components and electrical contacts are electrically isolated from each other.

Not the least purpose of the invention is to realise a flat piezoresistive pressure sensor in which the electronic components are adequately protected and in which the circuits and electrical contacts are electrically isolated from each other, and which is simple to manufacture with standard production line equipment.

The technical task, as well as these and other purposes, according to the present invention are achieved by making a piezoresistive flat pressure sensor, as defined by independent claims 1 and 13, comprising a flexible flat membrane made of a ceramic material and a related rigid flat support made of a ceramic material, a plurality of electronic components and electrical contacts mounted on a main face of the rigid flat support, an electrically insulating material protecting the plurality of electronic components, and a shaped frame containing the protection material, wherein the shaped frame circumscribes one or more first compartments of accumulation of the protection material housing the plurality of electronic components, and one or more second compartments devoid of the protection material, wherein the protection material is formed of a hardened fluid in which the plurality of electronic components is submerged.

In a preferred form of execution, the first accumulating compartments are configured to house the plurality of electronic components entirely within them.

In a preferred form of execution, the shaped frame includes a perimeter cornice and inner delimiting baffles of the first accumulating compartments and second compartments.

In a form of execution, the protection material is a polymeric or acrylic or silicone or epoxy or polyurethane resin or equivalent, electrically insulating and thermally insulating or conductive as required.

In one form of execution, the shaped frame is a rigid plastic frame.

In one form of execution, the shaped frame is a rigid metal frame.

In one form of execution, the shaped frame is a rigid rubber frame.

In one form of execution, the shaped frame is a frame made of polymer resin or equivalent material, dispensed and manufactured in situ, directly on the sensor by means of a moulding technique, or fused deposition modelling, or stereolithography, or selective laser sintering, or other 3D printing and/or material deposition technology

Other features of the present invention are also defined in subsequent claims.

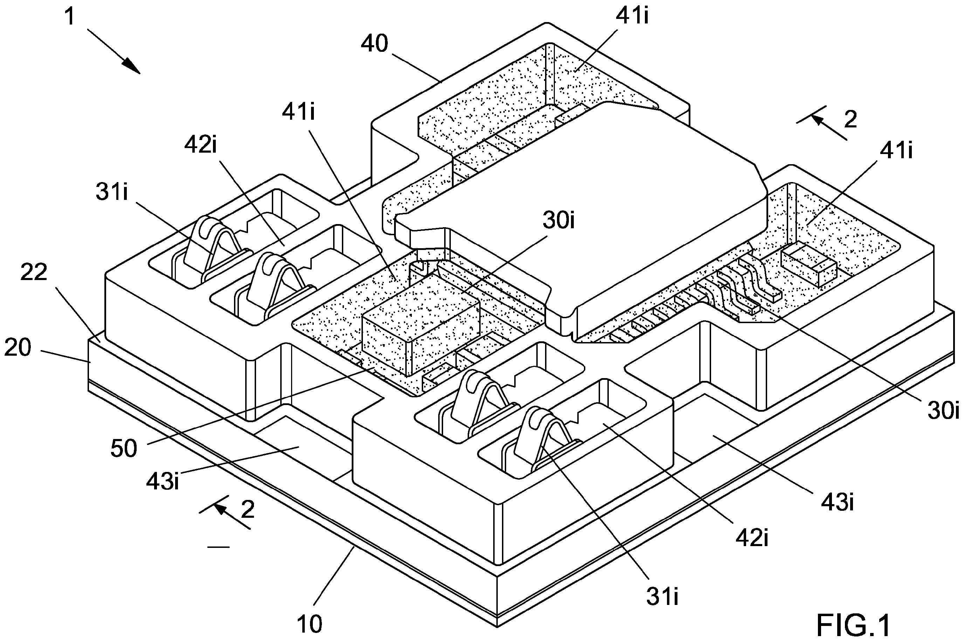

Further features and advantages of the invention will become more apparent from the description of a preferred but non-exclusive first form of a flat piezoresistive pressure sensor according to the invention, illustrated by way of illustration and not limitation in the accompanying drawings, in which
Figure 1 shows a perspective view from above of a pressure sensor according to the invention;
Figure 2 shows the pressure sensor sectioned according to the vertical plane 2-2 in figure 1.

The following detailed description refers to the attached drawings, which form part of it.

In drawings, similar reference numbers typically identify similar components, unless the context indicates otherwise.

The illustrative forms of realisation described in the detailed description and drawings are not intended in a limiting sense.

Other forms of realisation may be used, and other modifications may be made without departing from the scope of the invention as defined in the appended claims.

The aspects of this description, as generally described in this context and illustrated in the drawings, can be arranged, substituted, combined, and designed in a wide variety of different configurations, all of which are explicitly contemplated and are part of this description.

With reference to the above-mentioned figures, a pressure sensor is shown with the overall reference number 1.

For the sake of simplicity and clarity of the drawing, the top cover, typically positioned to close the sensor, is not shown.

Pressure sensor 1 typically comprises a flexible flat diaphragm 10 made of ceramic material and a corresponding rigid flat support 20 also made of ceramic material.

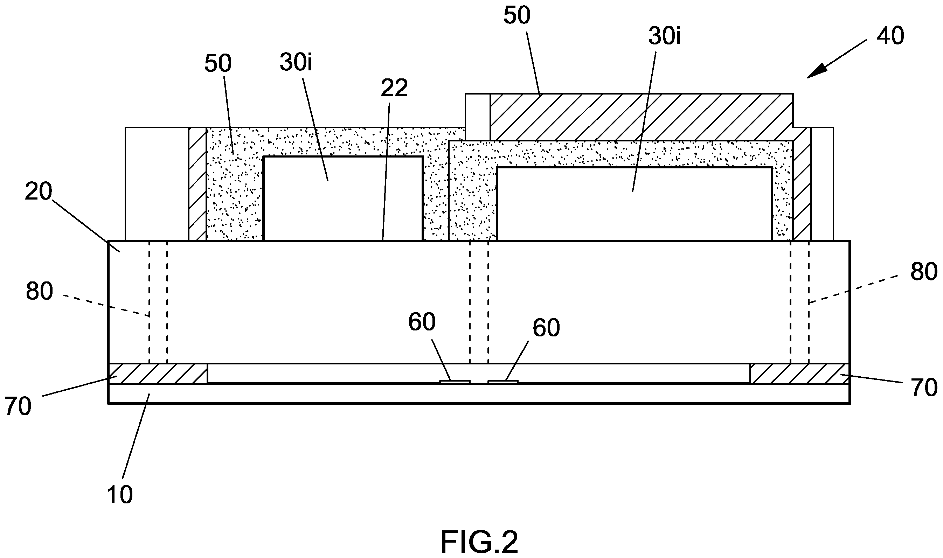

The flexible flat membrane 10 and the corresponding rigid flat support 20 can be made in one piece or, as shown in figure 2, in two separate pieces suitably connected.

In the solution shown, the membrane 10 is electrically connected to the support 20 via electrically conductive pillars 70.

On the side of the membrane 10 facing the support 20 is the Wheatstone bridge 60 whose electrical signals are routed to the side of the support 20 opposite the membrane 10 via the pillars 70 and metallized holes 80 passing through the thickness of the support 20.

The rigid flat carrier 20 has a main face 22 opposite the flexible flat membrane 10 on which are mounted a plurality of electronic components 30i, typically comprising integrated circuits and electronic components, and a plurality of electrical contacts 31i, typically made of copper or silver or gold.

The electronic components 30i are configured to process the electrical signal transmitted by the deformation of the flexible membrane 10 subjected to the pressure under detection, and the electrical contacts 31i are the connection points for the power supply/transmission of the processed data to an external network, not shown in the figure.

These electronic components 30i and electrical contacts 31i are positioned and soldered on the upper face 22 of the support 20 using the well-known 'Surface-mount Technology' with standard automatic 'pick and place' machines.

Advantageously and innovatively, the present invention provides an electrically insulating material 50 for protecting the plurality of electronic components 30i and a shaped frame 40 for containing said protection material 50, typically a rigid plastic frame, i.e., a rigid metal frame, comprising a perimeter cornice and inner delimiting baffles.

Appropriately, the internal demarcation baffles of the shaped frame 40 circumscribe and delimit one or more first accumulating compartments 41i configured to house entirely within them the plurality of electronic components 30i that need protection from moisture and/or the conditions of a hostile external environment, and one or more second accumulating compartments 42i that do not need or should be unprotected, such as electrical contacts, plugs or springs or pads for electrical connections.

Appropriately, the first 41i accumulating compartments are open at the top and bottom.

Within the first accumulating compartments 41i as configured and in the volumes defined by the height of the frame 40, a protection filler is then poured to saturation in which the plurality of electronic components 30i is submerged, typically a polymer resin or equivalent, electrically insulating and thermally insulating or conductive material, which can then be dispensed by automatic means of production, easily, quickly and accurately.

Appropriately, the electrical contacts 31i are placed individually in the second compartments 42i between them.

Advantageously and appropriately, in the case of a rigid frame made of an electrically insulating material, the shaped frame 40 has internal demarcation baffles of the second compartments 42i electrically insulating the electrical contacts 31i to prevent any risk of inadvertent short-circuiting or migration between two neighbouring metal contacts when exposed to moisture or condensation.

Advantageously and suitably, the frame 40 also identifies and leaves free contact areas 43i suitable for coupling the pressure sensor 1 against the device whose pressure is being monitored, which can serve as support and contact areas of a presser/lid positioned above for closing the sensor in a container which also has integrated and co-moulded within it electrical connection terminals which connect to said electrical contacts, typically in the diagram positioned inferiorly to the membrane 10, i.e. for coupling sensor 1 with its upper cover, not shown here.

In one form of execution, the shaped frame 40 made in plastic has a flattened apical gripping area for a manipulator for automatic assembly using a pick-and-place assembly machine.

The method for positioning the shaped plastic frame 40 so configured on surface 22 of the support 20, according to the present invention comprises a first step in which the bottom of the shaped frame 40 is impregnated inside a container filled with a suitable adhesive material (so-called moulding process) and a second step in which the shaped frame 40 thus impregnated is positioned on surface 22 of the support 20 in the same manner in which the electronic components 30i and the electrical contacts 31i are positioned with solder paste on the surface 22 of the support 20, with a standard automatic "pick and place" machine.

Alternatively, in other forms of realisation, the attachment of the shaped frame 40 to the surface 22 of the substrate 20 can be achieved by other known methods, such as welding, traditional bonding with 'Surface-mount Technology' or any other mechanical adhesion process.

In this way, in the same equipment as the manufacturing process line, it is possible to perform reflow soldering of electronic devices 30i and electrical contacts 31i, the positioning of the shaped frame 40 and the curing of the bonding or melting of the soldering alloy for adhesion of the shaped frame 40 to the surface 22 of the substrate 20.

In a step subsequent to the positioning of the shaped frame 40 on the surface 22 of the substrate 20, the process of dispensing the aforementioned resin or an equally suitable protection material is envisaged, in order to fill to saturation the volumes corresponding to the first accumulating compartments 41i.

Advantageously, this dispensing and pouring operation can be carried out quickly, repetitively and reliably with standard automatic dispensing equipment, and plus in a multiple configuration to reduce the time and cost of the entire operation.

At the end of the dispensing operation, a final polymerisation of the resin thus dispensed and distributed is carried out in a process performed at room temperature or alternatively in an oven at a temperature defined by the process and the product in question.

In a form of embodiment of the present invention, and as an alternative and analogy to a rigid plastic or metal shaped frame 40, a resin containment barrier having geometric characteristics similar to those of the shaped frame 40 is realized by dispensing on the surface 22 of the support 20, advantageously made of the same material as the protection material, directly fabricated on the sensor by means of a co-moulding technique, or fused deposition modelling, or stereolithography, or selective laser sintering, or other 3D printing and/or material deposition technology; subsequently, within the volumes corresponding to the first accumulating compartments 41i thus innovatively defined, the protection material is dispensed, typically electrically insulating resin, in which the plurality of electronic components 30i is submerged (c.so-called wet-on-wet process, but also wet-on-dry).

Advantageously, this method results in a further simplification of the process and a further reduction in costs, with only the additional time required to supply and dispense the containment barrier resin with sufficient precision and care during the formation of the template. Innovatively and advantageously therefore, a method and process for manufacturing a flat piezoresistive pressure sensor 1 according to the present invention comprises the steps of:
- making a body including the flexible flat membrane 10 in ceramic material and the corresponding rigid flat support 20 in ceramic material;
- attaching electronic components 30i and electrical contacts 31i to the main face 22 of the rigid flat support 20;
   and also:
- applying on the surface 22 of the support 20 the shaped frame 40 circumscribing the first accumulating compartments 41i where the plurality of electronic components 30i are located, and the second compartments 42i;
   --dispensing selectively the protective hardening fluid in electrically insulating material into the first accumulating compartments 41i until the plurality of electronic components 30i are submerged;
- Hardening the protective fluid.

In practice, it was found that a flat piezoresistive pressure sensor according to the invention is particularly advantageous for the protection of electrical/electronic components against moisture and/or harsh environmental conditions.

Another advantage of the invention is to realise a flat piezoresistive pressure sensor in which the electronic components are electrically isolated from each other.

Not the least advantage of the invention is to realise a flat piezoresistive pressure sensor, in which the electronic components are adequately protected and in which the electrical circuits are mutually electrically isolated, in a simple manner and with standard production line equipment. A pressure sensor designed in this manner is susceptible to numerous modifications and variations, all of which fall within the scope of the inventive concept as defined by the claims.

In practice, the materials used, as well as the dimensions, can be any according to requirements and the state of the art.

## Claims

1. A flat piezoresistive pressure sensor (1) comprising a flexible flat membrane (10) made of a ceramic material and a relative rigid flat support (20) made of a ceramic material having a main face (22) opposite the flexible flat membrane (10) , a plurality of electronic components (30i) and electrical contacts (31i) fitted to the main face (22) of said rigid flat support (20), **characterised in that** the pressure sensor (1) comprises an electrically insulating material (50) protecting the plurality of electronic components (30i) and a shaped frame (40) containing said protective material, wherein said shaped frame (40) surround one or more first accumulating compartments (41i) of said protective material housing said plurality of electronic components (30i), and one or more second compartments (42i) devoid of said protective material wherein electrical contacts (31i) are positioned, and wherein said protective material is formed of a hardened fluid in which said plurality of electronic components (30i) is submerged.

2. The flat piezoresistive pressure sensor (1) according to the preceding claim, **characterised by** the fact that said first accumulating compartments (41i) are configured to house entirely within them said plurality of electronic components (30i).

3. The flat piezoresistive pressure sensor (1) according to any of the preceding claims, **characterised by** the fact that said first accumulating compartments (41i) are open above and below.

4. The flat piezoresistive pressure sensor (1) according to any preceding claim, **characterised in that** said shaped frame (40) comprises a perimeter cornice and inner delimiting baffles of said first accumulating compartments (41i) and said second accumulating compartments (42i) .

5. The flat piezoresistive pressure sensor (1) according to any preceding claim, **characterised by** the fact that said protection material is electrically insulating and thermally insulating or conductive.

6. The flat piezoresistive pressure sensor (1) according to any preceding claim, **characterised in that** said protection material is a polymeric or acrylic or silicone or epoxy or polyurethane resin.

7. The flat piezoresistive pressure sensor (1) according to any preceding claim, **characterised in that** said electronic components (30i) comprise integrated circuits and discrete components.

8. The flat piezoresistive pressure sensor (1) according to any preceding claim, **characterised by** the fact that said electrical contacts (31i) are individually positioned in said second compartments (42i) separated from each other.

9. The flat piezoresistive pressure sensor (1) according to the preceding claim, **characterised by** the fact that said second compartments (42i) are electrically insulating.

10. The flat piezoresistive pressure sensor (1) according to any preceding claim, **characterised by** the fact that said shaped frame (40) is a rigid plastic or metal or resin frame made on site.

11. The flat piezoresistive pressure sensor (1) according to any preceding claim, **characterised in that** said shaped frame (40) has a flattened apical gripping zone for a manipulator .

12. The flat piezoresistive pressure sensor (1) according to any preceding claim, **characterised in that** said shaped frame (40) leaves free contact pressure areas (43i) suitable for coupling said sensor (1) against a device whose pressure is monitored, which can serve as support and contact areas of a presser/lid positioned on the top for the closure of said sensor in a container having inside it integrated and co-moulded also electrical connection terminals that go to connect to said electrical contacts, or to couple said sensor (1) with its upper cover.

13. Method of manufacturing a flat piezoresistive pressure sensor (1), comprising the steps of:
- making a body comprising a flexible flat membrane (10) made of ceramic material and a corresponding rigid flat support (20) made of ceramic material with a main face (22) opposite the flexible flat membrane (10);
- applying a plurality of electronic components (30i) and electrical contacts (31i) to the main face (22) of said rigid flat support (20);
and **characterised by** the fact that it further comprises the steps of:
- applying a shaped frame (40) circumscribing one or more first accumulating compartments (41i) where said plurality of electronic components (30i) is located, and one or more second compartments (42i);
- dispensing selectively into said first accumulating compartments (41i) a hardening protection fluid made of an electrically insulating material until said plurality of electronic components (30i) is submerged;
- hardening said protective fluid.

## Patentansprüche

1. Ein flacher piezoresistiver Drucksensor (1), der eine flexible flache Membran (10) aus keramischem Material und eine relative starre flache Stütze (20) aus keramischem Material mit einer Hauptfläche (22) gegenüber der flexiblen flachen Membran (10) umfasst, eine Vielzahl von elektronischen Bauteilen (30i) und elektrischen Kontakten (31i), die an der Hauptfläche (22) der genannten starren flachen Stütze (20) angebracht sind, **dadurch gekennzeichnet, dass** der Drucksensor (1) ein elektrisch isolierendes Material (50) aufweist, das die Vielzahl von elektronischen Bauteilen (30i) schützt, und einen geformten Rahmen (40), der besagtes Schutzmaterial enthält, wobei besagter geformter Rahmen (40) eine oder mehrere erste ansammelnde Fächer (41i) des genannten Schutzmaterials umgibt, die besagte Vielzahl von elektronischen Bauteilen (30i) aufnehmen, und eine oder mehrere zweite Fächer (42i) ohne besagtes Schutzmaterial, in denen elektrische Kontakte (31i) positioniert sind, und wobei besagtes Schutzmaterial aus einem gehärteten Fluid gebildet ist, in dem besagte Vielzahl von elektronischen Bauteilen (30i) eingetaucht ist

2. Der flache piezoresistive Drucksensor (1) gemäß der vorhergehenden Anspruch zeichnet sich dadurch aus, dass besagte ersten ansammelnden Fächer (41i) so konfiguriert sind, dass sie die gesamte Vielzahl von elektronischen Bauteilen (30i) vollständig aufnehmen können.

3. Der flache piezoresistive Drucksensor (1) gemäß einer der vorhergehenden Ansprüchen zeichnet sich dadurch aus, dass besagte ersten ansammelnden Fächer (41i) oben und unten offen sind

4. Der flache piezoresistive Drucksensor (1) gemäß einer der vorhergehenden Ansprüchen zeichnet sich dadurch aus, dass besagter geformter Rahmen (40) eine umlaufende Rahmenleiste und innere Begrenzungsschotten der genannten ersten ansammelnden Fächer (41i) und der genannten zweiten ansammelnden Fächer (42i) umfasst.

5. Der flache piezoresistive Drucksensor (1) gemäß einer der vorhergehenden Ansprüchen zeichnet sich dadurch aus, dass besagtes Schutzmaterial elektrisch isolierend und thermisch isolierend oder leitend ist.

6. Der flache piezoresistive Drucksensor (1) gemäß einer der vorhergehenden Ansprüchen zeichnet sich dadurch aus, dass besagtes Schutzmaterial ein polymeres oder acrylisches oder silikonbasiertes oder epoxidbasiertes oder polyurethanbasiertes Harz ist.

7. Der flache piezoresistive Drucksensor (1) gemäß einer der vorhergehenden Ansprüchen zeichnet sich dadurch aus, dass besagte elektronische Bauteile (30i) integrierte Schaltkreise und diskrete Bauteile umfassen.

8. Der flache piezoresistive Drucksensor (1) gemäß einer der vorhergehenden Ansprüchen zeichnet sich dadurch aus, dass besagte elektrische Kontakte (31i) einzeln in den genannten zweiten Fächern (42i) positioniert sind, die voneinander getrennt sind.

9. Der flache piezoresistive Drucksensor (1) gemäß der vorhergehenden Anspruch zeichnet sich dadurch aus, dass besagte zweite Fächer (42i) elektrisch isolierend sind.

10. Der flache piezoresistive Drucksensor (1) gemäß einer der vorhergehenden Ansprüchen zeichnet sich dadurch aus, dass der genannte geformte Rahmen (40) ein starres Kunststoff- oder Metall- oder Harzgestell ist, das vor Ort hergestellt wird.

11. Der flache piezoresistive Drucksensor (1) gemäß einer der vorhergehenden Ansprüchen zeichnet sich dadurch aus, dass der genannte geformte Rahmen (40) eine abgeflachte apikale Greifzone für einen Manipulator aufweist.

12. Der flache piezoresistive Drucksensor (1) gemäß einer der vorhergehenden Ansprüchen zeichnet sich dadurch aus, dass der genannte geformte Rahmen (40) freie Kontakt-Druckbereiche (43i) freilässt, die geeignet sind, den Sensor (1) gegen ein Gerät zu koppeln, dessen Druck überwacht wird. Diese Bereiche können als Unterstützungs- und Kontaktflächen für einen Drücker/Deckel dienen, der oben auf dem Sensor zur Verschließung in einem Behälter positioniert ist. In diesem Behälter befinden sich auch integrierte und ko-geformte elektrische Anschlussklemmen, die an besagte elektrische Kontakte angeschlossen werden, oder um den Sensor (1) mit seinem oberen Deckel zu koppeln.

13. Verfahren zur Herstellung eines flachen piezoresistiven Drucksensors (1), umfassend die Schritte:
- Herstellung eines Körpers, der eine flexible flache Membran (10) aus keramischem Material und eine entsprechende starre flache Stütze (20) aus keramischem Material mit einer Hauptfläche (22) gegenüber der flexiblen flachen Membran (10) umfasst;
- Aufbringen einer Vielzahl von elektronischen Bauteilen (30i) und elektrischen Kontakten (31i) auf die Hauptfläche (22) der genannten starren flachen Stütze (20); und **gekennzeichnet durch** die Tatsache, dass es weitere Schritte umfasst:
- Aufbringen eines geformten Rahmens (40), der eine oder mehrere erste ansammelnde Fächer (41i) umschließt, in denen sich besagte Vielzahl von elektronischen Bauteilen (30i) befindet, sowie ein oder mehrere zweite Fächer (42i);
- selektives Einbringen eines aushärtenden Schutzfluids aus einem elektrisch isolierenden Material in besagte erste ansammelnde Fächer (41i), bis besagte Vielzahl von elektronischen Bauteilen (30i) eingetaucht ist;
- Aushärten des Schutzfluids

## Revendications

1. Un capteur de pression piézorésistif plat (1) comprenant une membrane plate flexible (10) en matériau céramique et un support plat relativement rigide (20) en matériau céramique ayant une face principale (22) opposée à la membrane plate flexible (10), une pluralité de composants électroniques (30i) et de contacts électriques (31i) montés sur la face principale (22) dudit support plat rigide (20), **caractérisé en ce que** le capteur de pression (1) comprend un matériau électro-isolant (50) protégeant la pluralité de composants électroniques (30i) et un cadre façonné (40) contenant ledit matériau protecteur, ledit cadre façonné (40) entourant un ou plusieurs premiers compartiments d'accumulation (41i) dudit matériau protecteur contenant la pluralité de composants électroniques (30i), et un ou plusieurs deuxièmes compartiments (42i) dépourvus dudit matériau protecteur dans lesquels sont positionnés les contacts électriques (31i), et ledit matériau protecteur étant formé d'un fluide durci dans lequel ladite pluralité de composants électroniques (30i) est immergée.

2. Le capteur de pression piézorésistif plat (1) selon la revendication précédente, **caractérisé par le fait que** lesdits premiers compartiments d'accumulation (41i) sont configurés pour loger entièrement en leur sein ladite pluralité de composants électroniques (30i).

3. Le capteur de pression piézorésistif plat (1) selon l'une quelconque des revendications précédentes, **caractérisé par le fait que** lesdits premiers compartiments d'accumulation (41i) sont ouverts au-dessus et en-dessous.

4. Le capteur de pression piézorésistif plat (1) selon l'une quelconque des revendications précédentes, **caractérisé par le fait que** ledit cadre façonné (40) comprend une corniche périphérique et des cloisons intérieures délimitant lesdits premiers compartiments d'accumulation (41i) et lesdits deuxièmes compartiments d'accumulation (42i).

5. Le capteur de pression piézorésistif plat (1) selon l'une quelconque des revendications précédentes, **caractérisé par le fait que** ledit matériau de protection est électriquement isolant et thermiquement isolant ou conducteur.

6. Le capteur de pression piézorésistif plat (1) selon l'une quelconque des revendications précédentes, **caractérisé par le fait que** ledit matériau de protection est une résine polymère, acrylique, silicone, époxy ou polyuréthane.

7. Le capteur de pression piézorésistif plat (1) selon l'une quelconque des revendications précédentes, **caractérisé par le fait que** lesdits composants électroniques (30i) comprennent des circuits intégrés et des composants discrets.

8. Le capteur de pression piézorésistif plat (1) selon l'une quelconque des revendications précédentes, **caractérisé par le fait que** lesdits contacts électriques (31i) sont positionnés individuellement dans lesdits deuxièmes compartiments (42i) séparés les uns des autres.

9. Le capteur de pression piézorésistif plat (1) selon la revendication précédente, **caractérisé par le fait que** lesdits deuxièmes compartiments (42i) sont électro-isolants.

10. Le capteur de pression piézorésistif plat (1) selon l'une quelconque des revendications précédentes, **caractérisé par le fait que** ledit cadre façonné (40) est un cadre rigide en plastique, métal ou résine fabriqué sur place.

11. Le capteur de pression piézorésistif plat (1) selon l'une quelconque des revendications précédentes, **caractérisé par le fait que** ledit cadre façonné (40) présente une zone de préhension apicale aplatie pour un manipulateur.

12. Le capteur de pression piézorésistif plat (1) selon l'une quelconque des revendications précédentes, **caractérisé par le fait que** ledit cadre façonné (40) laisse libres des zones de pression de contact (43i) adaptées pour accoupler ledit capteur (1) contre un dispositif dont la pression est surveillée, qui peuvent servir de zones de support et de contact d'un presseur/couvercle positionné sur le dessus pour la fermeture dudit capteur dans un récipient ayant à l'intérieur des bornes de connexion électrique intégrées et moulées en coquille qui vont se connecter auxdits contacts électriques, ou pour accoupler ledit capteur (1) avec son couvercle supérieur.

13. Méthode de fabrication d'un capteur de pression piézorésistif plat (1), comprenant les étapes suivantes :
- fabrication d'un corps comprenant une membrane plate flexible (10) en matériau céramique et un support plat rigide correspondant (20) en matériau céramique avec une face principale (22) opposée à la membrane plate flexible (10);
- appliquer une pluralité de composants électroniques (30i) et de contacts électriques (31i) sur la face principale (22) dudit support plat rigide (20);
et **caractérisé par le fait qu'**il comprend en outre les étapes de :
- appliquer un cadre façonné (40) circonscrivant un ou plusieurs premiers compartiments d'accumulation (41i) où se trouvent ladite pluralité de composants électroniques (30i), et un ou plusieurs deuxièmes compartiments (42i);
- distribuer sélectivement dans lesdits premiers compartiments d'accumulation (41i) un fluide de protection durcissant composé d'un matériau électriquement isolant jusqu'à ce que ladite pluralité de composants électroniques (30i) soit immergée;
- durcissement dudit fluide protecteur.
